Europäisches Patentamt

European Patent Office

Office européen des brevets

(11) Publication number: **0 086 295**
A1

## EUROPEAN PATENT APPLICATION

(21) Application number: **82300820.6**

(22) Date of filing: **17.02.82**

(51) Int. Cl.³: **G 03 B 11/04**

(43) Date of publication of application: **24.08.83**
**Bulletin 83/34**

(84) Designated Contracting States: **DE FR GB**

(71) Applicant: **HOYA CORPORATION,**
**7-5 Nakaochiai 2-chome, Shinjuku-ku Tokyo (JP)**

(72) Inventor: **Chikano, Mitsuo, 1143-11, Fussa Fussa-shi,**
**Tokyo (JP)**

(74) Representative: **McCallum, William Potter et al,**
**Cruikshank & Fairweather 19 Royal Exchange Square,**
**Glasgow G1 3AE Scotland (GB)**

(54) **Lens shade.**

(57) A lens shade (1) made of a flexible material and having
the shape approximately of a hollow cylinder. One open end
of the lens shade (1) faces the object to be photographed,
while the other open end thereof has means for engagement
with a shade support which, in turn, is adapted to be mounted on or carried by a camera, an exchangeable lens or a
filter holder. The cylindrical portion of the lens shade has
a plurality of annular thin hinge portions (8, 9, 10) at any of
which the cylindrical portion can be folded. In use, the
cylindrical portion is folded at any, some or all of the hinge
portions (8, 9, 10) according to the focal length and the angle
of view of a camera lens system with which the lens shade
(1) is to be used, so as to prevent unnecessary light from
entering the camera.

ACTORUM AG

0086295

## LENS SHADE

The present invention relates to a lens shade for a camera.

At present, camera attachments, such as lens shades and filters, attached to the front of camera body tubes generally have large apertures because lenses having large diameters are often used. Therefore, lens shades of rubber are used which maintain their normal shapes during use and can be folded up like bellows for easy storage. However, such lens shades of rubber cannot be adjusted according to the change of the angle of incidence or the angle of view.

A lens shade disclosed in Japanese Utility Model Application No. Sho 50-74932 comprises a main portion of a hard material and a cylindrical portion of a flexible material continuously connected to one end of said main portion, said cylindrical portion being adapted to be folded back toward the inside according to the focal length and the angle of view. However, this lens shade cannot be reduced compactly in size, or folded in different manners so as to adapt itself to widely different angles of view.

It is an object of the invention to provide a lens shade which can be folded according to the focal length and the angle of view of a camera lens system with which it is to be used.

It is another object of the invention to provide a lens shade which can be reduced in size for easy carriage and storage.

According to the present invention, there is provided a photographic lens shade of a flexible material, comprising a conical portion and a cylindrical main portion continuously connected to the larger end of said conical portion, said conical portion being provided at its smaller end with a base portion having means for mounting the lens shade on a shade support, characterised in that hinge means is provided adjacent the junctions between said portions whereby the lens shade can be selectively folded about said hinge means so as to change its length according to the focal length and the angle of view of a photographic lens system with which the lens shade is to be used.

The lens shade of the invention is entirely made of a flexible material such as synthetic rubber or plastic, and has the overall shape approximately of a hollow cylinder, one open end thereof intended to be directed towards an object to be photographed, the other open end thereof being provided with an annular base portion having means for engagement with a shade support which, in turn, is adapted to be mounted on or carried by a camera, an exchangeable lens or a filter holder. The cylindrical portion of the lens shade has a plurality of annular thin hinge portions at any, all or some of which the cylindrical portion can be folded. In use, the cylindrical portion is folded at any, some or all of said annular thin hinge portions according to the focal length and the angle of view of a camera lens system with which the lens shade is to be used, so as to prevent unnecessary light from entering the camera.

Preferably, a conical portion is continuously connected to one end of a cylindrical main portion, and the annular base portion engaging with the shade support is continuously connected to the smaller end of the conical portion. A hinge between the base portion and the conical portion, a hinge between the conical portion and the cylindrical main portion, and a hinge intermediate the ends of the cylindrical main portion, e.g, approximately centrally thereof, respectively form annular thin hinge portions at any of which the cylindrical main portion or the conical portion can be folded so as to reduce the overall size of the lens shade or to permit a desired focal length and a desired angle of view.

Thus, the lens shade of the invention is very suitable for cameras and exchangeable lenses. It is entirely made of a flexible material such as synthetic rubber or plastic, and can be reduced in size for easy carriage and storage. By folding the main portion or the conical portion in any of a plurality of different manners by utilizing all or any of the hinges, the lens shade can be easily adapted to a change in the angle of view. Furthermore, the lens shade can be easily attached to the body tube of a camera, or to an exchangeable lens, because the base portion is provided with the means for engagement with the shade support. Also, the lens shade is inexpensive to manufacture because its base portion, conical portion and cylindrical main portion can be integrally formed, for example, by injection moulding.

Embodiments of the present invention will now be described, by way of example, with reference to the accompanying drawings in which:-

Fig. 1 is a half sectional side view of a lens shade according to a first embodiment of the invention-

Fig. 2 is an enlarged fragemtary sectional view of the lens shade of Fig. 1;

Figs. 3 to 5 are enlarged fragmentary sectional views of the lens shade of Figs. 1 and 2 folded in different manners according to the angle of view of a camera lens system used;

Fig. 6 is a fragmentary sectional view of a second embodiment of the invention;

Fig. 7 is a sectional view showing a third embodiment of the invention, and in which the lens shade is attached to a filter holder;

Fig. 8 is an exploded perspective view of the embodiment of Fig. 7;

Fig. 9 is a front view of a portion of a shade support as shown in Figs. 7 and 8; and

Fig. 10 is a sectional view taken on line X - X of Fig. 9.

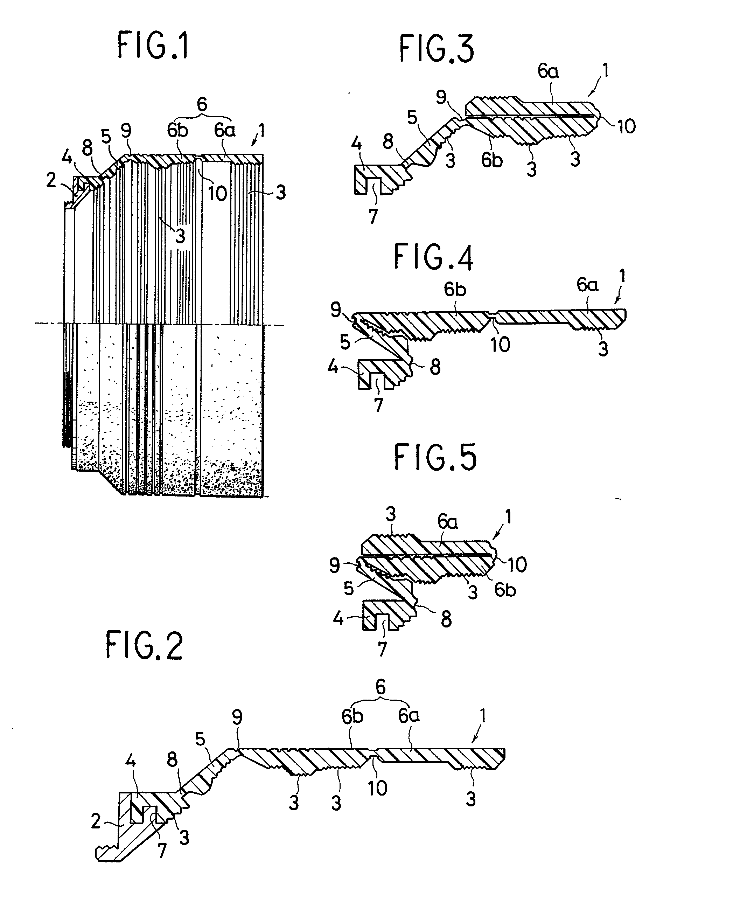

Referring to Fig. 1, a lens shade or hood 1 is made of a flexible material such as synthetic rubber or plastic, and one end thereof has means for engagement with a shade support in the form of an adapter ring 2 which can be secured to the body tube of a camera or an exchangeable lens. The lens shade 1 is provided on its inner surface with light intercepting means 3 consisting of annular grooves.

The lens shade 1 comprises an annular base portion 4, a conical portion 5 continuously connected to one end of the base portion 4, and a cylindrical main portion 6 continuously connected to the larger end of the concial portion 5. The base portion 4 is provided internally with an internally grooved connector 7 for engagement with a flange of the adapter ring 2. At the junction between the base portion 4 and the conical portion 5 there is formed a first annular hinge portion 8 which is thin relative to the general cross-sectional thickness of the lens shade 1. At the junction between the conical portion 5 and the main portion 6 there is formed a second annular thin hinge portion 9. At approximately the centre of the main portion 6 a third annular thin hinge portion 10 is formed which divides the main portion 6 into a front portion 6a and a rear portion 6b.

In order to use the lens shade 1, the adapter ring 2 suitable for the body tube of the camera or the exchangeable lens with which it is to be used is engaged by means of the connector 7 of the base portion 4 as shown in Fig. 1. This is accomplished by flexibly widening the base portion 4 of the flexible lens shade 1 and elastically engaging the flange of the adapter ring 2 in the internal groove of the connector 7 on the inside of the base portion 4. During the use of the lens shade 1, the light intercepting means 3 formed on the inner surface thereof prevents unnecessary light from reaching the film. Needless to say, the particular form of adapter ring 2 shown in Fig. 1 is merely an example and is not limited to the specific shape shown therein.

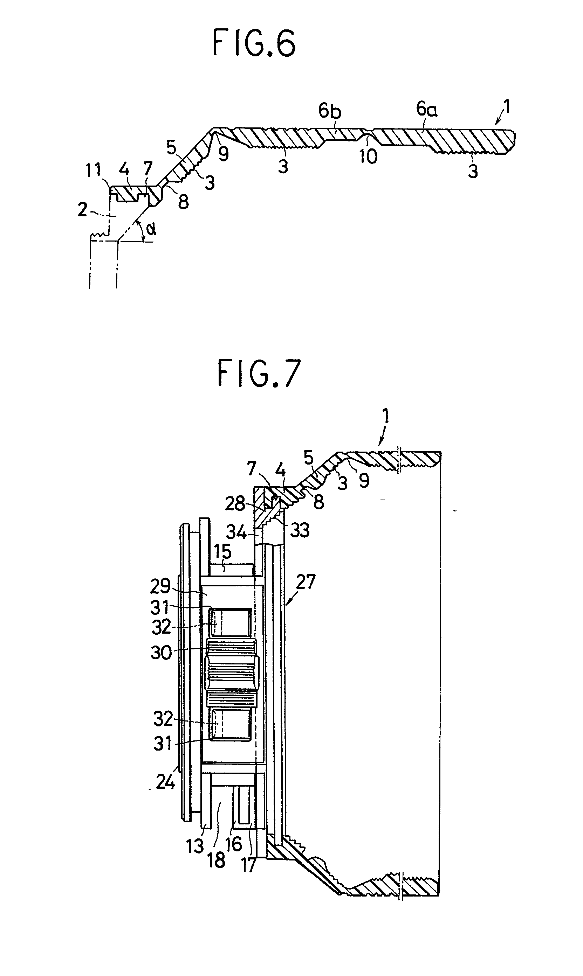

Fig. 2 is an enlarged sectional view showing the lens shade 1 in a normal state when it is not folded at any of its aforesaid hinge portions 8, 9 or 10. The lens shade 1 in this state is used, for instance, for a lens having a long focal length. Figs. 3 to 5 show the lens shade 1 in folded states used respectively for a standard lens, a wide-angle lens and an extra-wide-angle lens. In Fig. 3, the front main portion 6a is folded back toward the outside about the third hinge portion 10 so as to overlie the rear main portion 6b thereby reducing the overall length of the lens shade 1 and permitting a wider angle of view. In Fig. 4 the conical portion 5 is folded counterclockwise about the first hinge portion 8 and the main portion 6 is folded about the second hinge portion 9 toward the conical portion 5 so as to permit a still wider angle of view. As shown in Fig. 5, if, in addition to the state shown in Fig. 4, the front main portion 6a is folded back toward the outside about the third hinge portion 10 to overlie the rear main portion 6b, the lens shade 1 becomes the shortest in overall length and therefore it permits the widest angle of view. When the lens shade 1 is folded as shown in Fig. 5, it is compact and can be easily carried and stored. In the embodiment shown in Figs. 1 to 5, the lens shade 1 has three hinge portions, two at the ends of the conical portion 5 and one at the centre of the main portion 6, so that it can be folded in three different manners and permit four different angles of view. However, the lens shade 1 may have more than three hinge portions so that it can be folded in more than three different manners and permit more than four different angles of view.

Fig. 6 shows a second embodiment of the invention. In this embodiment, the inclination $\alpha$ of the conical portion 5 is slightly larger than in the embodiment shown in Fig. 1, and the annular base portion 4 is provided with a lip 11 for covering the outer circumference of the adapter ring 2 as well as with the grooved connector 7 for engagement with the adapter ring 2. In this embodiment, the lens shade 1 permits a wider angle of view than that of the above-described first embodiment when the latter is folded up as shown in Fig. 5. The light intercepting means 3 of the rear main portion 6b and the light intercepting means 3 of the conical portion 5 are respectively formed on the same planes and are made simpler in shape than in the first embodiment so as to facilitate manufacturing.

Fig. 7 shows a third embodiment of the invention, in which the lens shade 1 is detachably attached to the front of a filter holder 12 for a camera. This filter holder 12 is as disclosed in British Patent Application No. 8107161, and comprises a generally square-shaped body 13 having its corners bevelled, said body 13 being provided with a central circular aperture 14 and on its front face with right and left hand walls 15 from each of which a first plate 16 and a second plate 17 extend inwardly. The opening between the body 13 and the first plate 16 defines a first groove 18 for receiving a filter or a filter mount 21, while the opening between the first and second plates 16 and 17 defines a second groove 19 for receiving a filter in a similar manner. Each of the side walls 15 has two upper and two lower concave portions 20. The bottom of each of these concave portions 20 is provided with a spring (not shown) for resiliently engaging the edge of a filter or filter mount 21 inserted into the first groove 18 or the second groove 19. The rear of the body 13 is provided with an annular groove 22 having a plurality of claws 23 for engagement with a flange 25 of an adapter ring 24. The adapter ring 24 has a threaded portion 26 by means of which it can be secured to a camera.

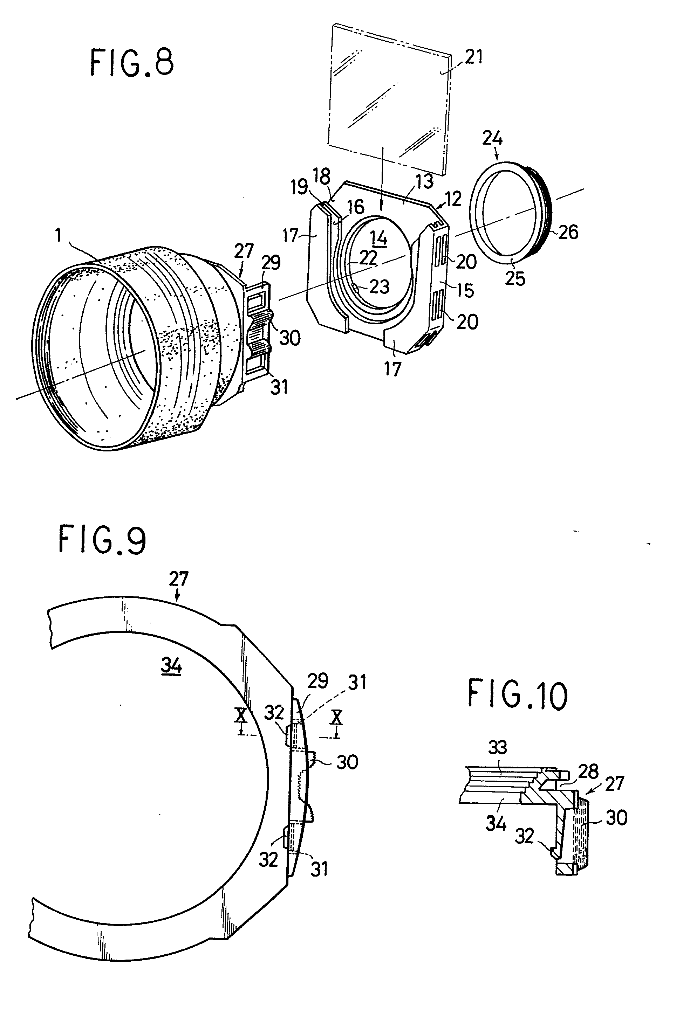

In this third embodiment, the main body of the lens shade 1 attached to the front of said filter holder 12 is the same as that of the first embodiment shown in Figs. 1 to 5. In this embodiment, however, a shade support 27 for supporting the lens shade 1, has elaborate means for engagement with the filter holder 12. As shown in Fig. 7 the body of the shade support 27 is provided with a central circular aperture 34, and on its circumference with an annular groove 28 defined by two flanges for engagement with the grooved connector 7 of the base portion 4 of the lens shade 1.   Furthermore, the body of the shade support 27 is integrally provided on its right and left sides with side walls 29.   Each of the side walls 29 has a knurled knob 30 in its centre, openings 31 over and under the knob 30, and engagement elements 32 each extending from one side of each opening 31 toward the other side thereof.   These engagement elements 32 are engageable with the concave portions 20 in the side walls 15 of the filter holder 12 so as to enable connection of the shade support 27 to the filter holder 12.   As shown in Figs. 7 and 10, the body of the shade support 27 is provided on its inner surface with light intercepting means 33 which form a continuation of the light intercepting means 3 of the lens shade 1 when the latter is fitted to the shade support 27.

Different kinds of filters or filter mounts 21 can be inserted into the grooves 18 and 19 of said filter holder 12.   The filter holder 12 is very convenient for use because it is rotatable with respect to the adapter ring 24.   The lens shade of this embodiment can be easily attached to and detached from the filter holder 12.   The attachment of the lens shade thereto does not impair the function of the filter holder 12.

CLAIMS:

1.  A photographic lens shade (1) of a flexible material, comprising a conical portion (5) and a cylindrical main portion (6) continuously connected to the larger end of said conical portion (5), said conical portion (5) being provided at its smaller end with a base portion (4) having means (7) for mounting the lens shade on a shade support, characterised in that hinge means (8,9) is provided adjacent the junctions between said portions whereby the lens shade can be selectively folded about said hinge means (8,9) so as to change its length according to the focal length and the angle of view of a photographic lens system with which the lens shade is to be used.

2.  A lens shade as claimed in Claim 1, wherein said shade support is an adapter ring (2) directly attachable to the body tube of a lens.

3.  A lens shade as claimed in Claim 1, wherein said shade support has engagement elements (32) adapted to engage concave portions (20) in side walls (15) of a filter holder (12) attachable to the body tube of a lens.

4.  A lens shade as claimed in any preceding claim, in which hinge means (10) is provided intermediate the ends of the cylindrical main portion (6).

5.  A lens shade as claimed in any preceding claim, in which said conical portion (5) and cylindrical main portion (6) are provided on their inner surfaces with light intercepting means (3).

0086295

FIG.1

FIG.3

FIG.4

FIG.5

FIG.2

# FIG.6

# FIG.7

0086295

# FIG.8

# FIG.9

# FIG.10

European Patent Office

**EUROPEAN SEARCH REPORT**

0086295
Application number

EP 82 30 0820.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE – U – 7 230 806 (ROLLEI) <br> * fig. * | 1,2 | G 03 B 11/04 |
| Y | DE – U – 7 027 872 (ZEISS IKON) <br> * fig. 1, 2 * | 1,2 | |
| Y | DE – A – 2 131 076 (K. SAKUMA) <br> * fig. 2, 4 * | 1,2,5 | |
| | | | **TECHNICAL FIELDS SEARCHED (Int.Cl. ³)** |
| Y | US – A – 2 350 110 (H.J. HOOD) <br> * fig. 3 to 6 * | 1,2 | |
| Y | DE – U – 1 936 806 (KUNSTSTOFF-TECHNIK B. WLASAK) <br> * fig. * | 1,4,5 | G 03 B 11/00 |
| D,A | JP – U – 50 – 74932 <br> * fig. 1 to 3 * | 1 | |
| A | DE – U – 1 899 676 (E. KAISER) <br> * fig. * | 1,5 | |

The present search report has been drawn up for all claims

| Place of search | Date of completion of the search | Examiner |
|---|---|---|
| Berlin | 21-06-1982 | HOPPE |

EPO Form 1503.1  06.78